## Europäisches Patentamt

## European Patent Office

## Office européen des brevets

(11) Veröffentlichungsnummer: **0 011 740**
**A1**

## (12) EUROPÄISCHE PATENTANMELDUNG

(21) Anmeldenummer: **79104360.7**

(22) Anmeldetag: **07.11.79**

(51) Int. Cl.³: **G 03 B 23/02**

(30) Priorität: **14.11.78 DE 2849361**

(43) Veröffentlichungstag der Anmeldung:
**11.06.80 Patentblatt 80/12**

(84) Benannte Vertragsstaaten:
**BE FR GB IT**

(71) Anmelder: **Agfa-Gevaert AG**
**Camera-Werk Patent- und Lizenzwesen Postfach**
**D-8000 München 90(DE)**

(72) Erfinder: **Grünbacher, Martin**
**Burgsolmser Weg 19**
**D-6333 Braunfels(DE)**

(54) **Diaprojektor.**

(57) Ein Diaprojektor (1) ist zur Projektion von in unterschiedlichen Magazinen (3, 11) untergebrachten, gerahmten Diapositiven (2) geeignet. Die zu verwendenden Magazine (3, 11) unterscheiden sich durch eine unterschiedliche Diafachbreite. Es soll eine Anpassung der wirksamen Breite des Diawechselschiebers (4) des Projektors (1) an die unterschiedlichen Diafachbreiten der unterschiedlichen Magazine (3, 11) bewirkt werden. Hierzu ist die Breite des Diawechselschiebers (4) in seinem wirksamen Bereich kleiner als der Abstand zwischen einem und dem übernächsten Diapositiv (2) in dem Magazin (11) mit der geringsten Diafachbreite. Außerdem ist ein in Transportrichtung des Diawechselschiebers (4) verschiebbarer Reiter (14) längs dieses wirksamen Bereichs bis an dessen Stirnakante (4b) verschiebbar, dessen Breite größer als die des Wechselschiebers (4) und kleiner als der Abstand zwischen einem und dem übernächsten Diapositiv (2) in dem Magazin (3) mit der größeren Diafachbreite ist.

./...

Croydon Printing Company Ltd.

EP 0 011 740 A1

*Fig. 1*

# AGFA-GEVAERT AG 0011740

**LEVERKUSEN**

CAMERA-WERK MÜNCHEN
PATENTABTEILUNG

10-eh-ro CW 2173.8 PP/MP

13. Nov. 1978

<u>Diaprojektor</u>

Die Erfindung betrifft einen Diaprojektor für gerahmte Diapositive, die in Magazinen unterschiedlicher Typen angeordnet sind, wobei sich die verschiedenen Magazintypen durch eine unterschiedliche Diafachbreite unterscheiden, mit einem motorisch oder von Hand betätigbaren Diawechselschieber und mit einer Vorrichtung zum schrittweisen Weitertransport des jeweils eingesetzten Magazins um jeweils eine Diafachbreite nach der Zurückführung eines projizierten Dias in das Magazin.

Der Erfindung liegt die Aufgabe zugrunde, eine Anordnung zur Anpassung der wirksamen Breite eines Diawechselschiebers an unterschiedliche Diafachbreiten von Magazinen zu schaffen, die platzsparend, von kleiner Bauweise und einfach herstellbar und einfach zu bedienen ist.

Diese Aufgabe wird durch die Merkmale des Hauptanspruchs gelöst, wobei weitere vorteilhafte Merkmale den Unteransprüchen entnehmbar sind.

-2-

CW 2173.8 PP/MP

Die Erfindung wird anhand von Zeichnungen näher erläutert.
Es zeigen

Fig. 1          eine perspektivische Darstellung eines
                erfindungsgemäßen Stehbildprojektors
                und zugehöriger Diamagazine,

Fig. 2 und 3    Ansichten des Projektors nach Fig. 1
                von hinten, teilweise aufgebrochen, bei
                Verwendung von zwei unterschiedlichen
                Diamagazinen,

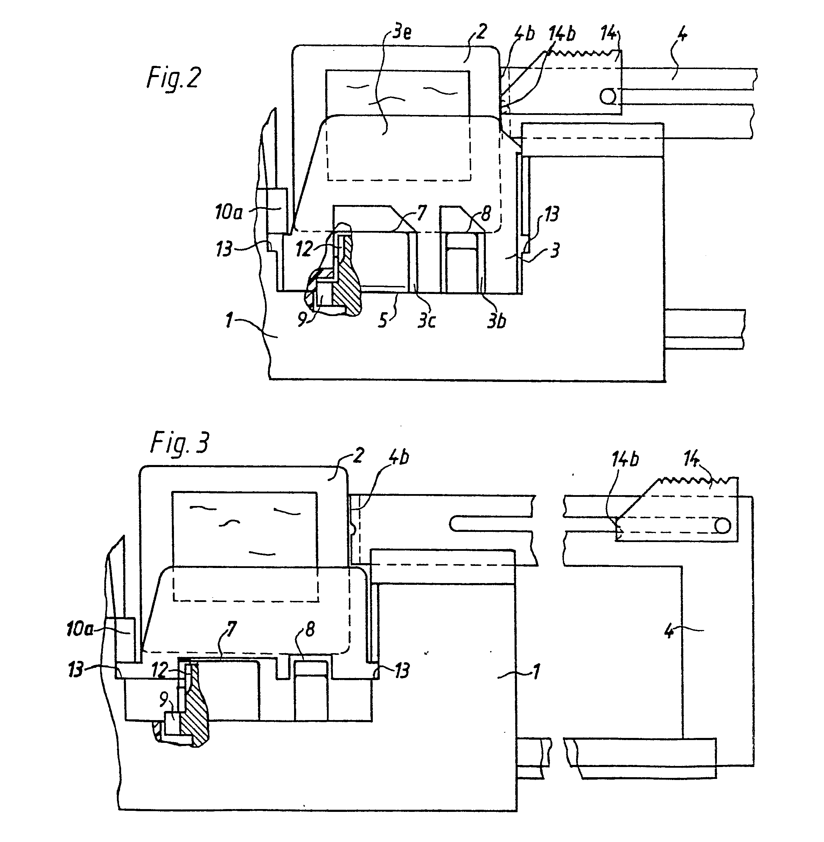

Fig. 4 und 5    eine Draufsicht auf den Projektor nach

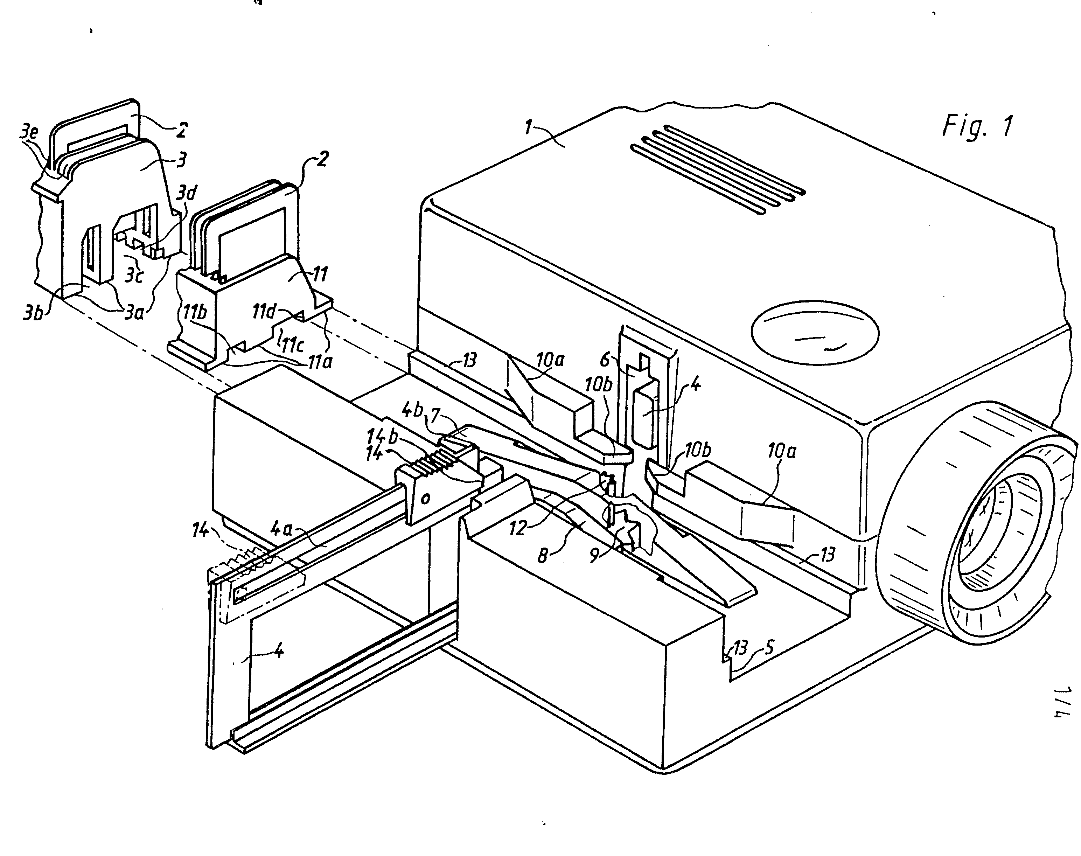

                Fig. 1, teilweise aufgebrochen, bei
                Verwendung der zwei unterschiedlichen
                Diamagazine gemäß den Fig. 2 und 3.

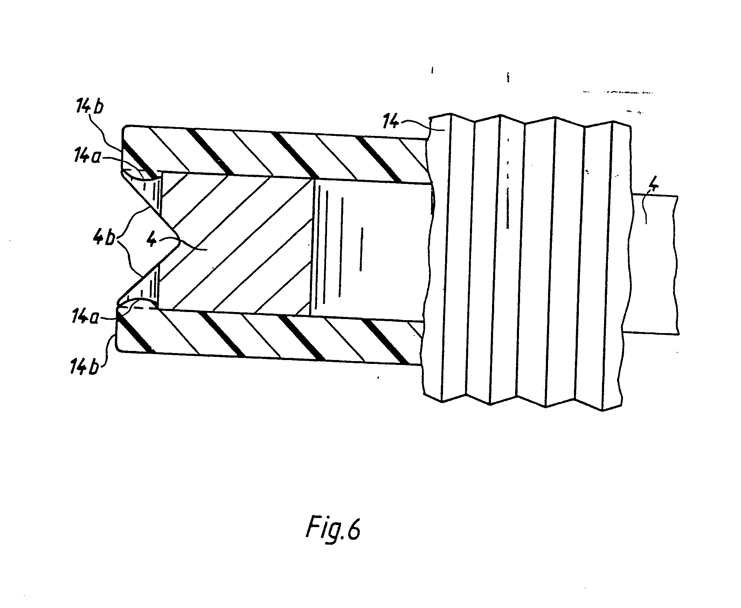

Fig. 6          eine vergrößerte Darstellung eines Teils
                des Diawechselschiebers des Projektors
                nach Fig. 1

In den Figuren ist mit 1 ein Stehbildprojektor beziffert,
der zur Vorführung von gerahmten Diapositiven 2, welche
in einem bekannten sog. Einheitsmagazin 3 angeordnet sind,
ausgestattet ist.

Dieser bekannte Magazintyp 3 weist drei Bodenleisten 3a auf,
die durch eine breite und eine schmale Ausnehmung 3b, 3c von-

CW 2173.8 PP/MP

einander getrennt sind. Dabei ist an der äußeren Bodenleiste, die die breite Ausnehmung 3c begrenzt, eine Zahnstange 3d vorgesehen. Die im Einheitsmagazin 3 befindlichen
Dias 2 liegen auf den Bodenleisten 3a auf und sind durch
Fachwände 3e voneinander getrennt. Die Höhe der Fachwände 3e
ist erheblich kleiner als die Höhe der Diarahmen 2, so daß
die Diarahmen 2 durch einen von Hand oder motorisch zu betätigenden projektorseitigen Diawechselschieber 4 oberhalb
der Fachwände 3e erfaßt und an der Magazinseite, an der
die Fächer offen sind, in den Belichtungsstrahlengang des
Projektors 1 und zurück ins Magazin 3 bewegt werden können.

Der Projektor 1 weist eine Führungsbahn 5 auf, die schachtartig ausgebildet ist und etwa die Breite des Magazintyps 3 hat. Am Boden der Führungsbahn 5 sind zwei zur Diaeinführöffnung 6 etwa symmetrische Keile 7, 8 vorgesehen, die
so angeordnet sind, daß die Ausnehmungen 3c, 3b eines in die
Führungsbahn 5 eingesetzten Magazins 3 darübergleiten. Sie
dienen dazu, daß die Dias 2 von ihrer Lage auf den Bodenleisten 3a allmälich beim Transport des Magazins 3 in die
Höhe der Einführöffnung 6 angehoben werden und nach ihrer
Vorführung wieder auf die Bodenleisten 3a herabsinken.

0011740

CW 2173.8 PP/MP

Im oder unterhalb des Keiles 7 ist der Zahnstange 3d zugewandt ,ein Zahnrad 9 auf einer Welle angeordnet. Das
Zahnrad 9 wird nach jedem Diawechsel entweder motorisch
oder von Hand durch eine nicht gezeigte Schaltvorrichtung am
Wechselschieber 4 um einen Zahn fortgeschaltet. Die Fortschaltung um einen Zahn entspricht dabei der Fortschaltung
des Magazins 3 um ein Diafach. Zu beiden Seiten der Einführöffnung 6 sind Doppelkeile 10a, 10b vorgesehen, die dafür
sorgen, daß beim Magazintransport die Dias 2 im Magazin 3
ausgerichtet und das jeweils zu projizierende Dia 2 auf
die Einführöffnung 6 ausgerichtet wird.

Nun soll in dem Projektor 1 auch noch ein zweiter Magazintyp 11 verwendet werden können, bei dem der Abstand der
Diafächer kleiner ist, weil beispielsweise die Fachwände
entfallen. Mit dem Magazintyp 3 hat der Magazintyp 11 die
drei Bodenleisten 11a und die Ausnehmungen 11b, 11c gemeins
Auch bei diesem Magazintyp 11 sind die Fächer zur Einführöffnung 6 hin offen. Auch stehen die Dias 2 oben über das
Magazin 11 vor. Der Magazintyp 11 ist jedoch breiter, so da
er nicht in die Führung 5 eingeschoben werden kann. Seine
Zahnstange 11d liegt näher an der Längsmittelebene des
Magazins als beim Magazin 3 und er ist niedriger ausgebild

CW 2173.8 PP/MP

In bereits vorgeschlagener Weise ist am Projektor 1 koaxial zum Zahnrad 9 ein darüber liegendes Zahnrad 12 vorgesehen. Sein Durchmesser und seine Lage sind so bemessen, daß das Zahnrad 12 mit der Zahnstange 11d beim Einsetzen eines Magazins 11 in den Projektor 1 in Eingriff gelangt und bei Drehung um einen Zahn das Magazin 11 um ein Diafach weiter transportiert. Um eine einfache Fortschaltungsvorrichtung zu erhalten sind Zahnstangen 3d, 11d und Zahnräder 9, 12 so ausgelegt, daß die Zahnräder 9, 12 die gleiche Zähnezahl haben. Eine weitere Besonderheit des Magazintyps 11 besteht in bereits vorgeschlagener Weise darin, daß die Dias 2 in Nuten geführt sind und nicht im Magazin 11 angehoben, sondern nur seitlich aus- und eingeschoben werden können. Deshalb muß das Magazin 11 so in den Projektor eingesetzt werden, daß die Auflagefläche der Bodenleisten 11a unmittelbar über der höchsten Erhebung der Keile 7, 8 liegt. Auch deshalb ist es wichtig, daß der zweite Magazintyp 11 nicht in die Führungsbahn 5 für den Magazintyp 3 einsetzbar ist, damit keine Verwechslungen auftreten können und jeder der beiden Magazintypen 3, 11 beim Einsetzen automatisch mit dem ihm zugeordneten Zahnrad 9 bzw. 12 in Eingriff kommt.

0011740

CW 2173.8 PP/MP

Hierzu ist oberhalb der Magazinbahn 5 für den Magazintyp 3
an beiden Längsseiten eine Stufe 13 vorgesehen, durch die
der Magazinschacht so erweitert wird, daß ein Magazin 11
auf die Stufen 13 aufgesetzt werden kann. Die Höhe der
Stufen 13 ist so bemessen, daß die Diaunterkanten der
im Magazin 11 befindlichen Dias 2 gerade über den Keilen 7, 8
liegen, also ohne Anhebung über die Keile 7, 8 und quer
dazu in die Einführöffnung 6 mittels des Wechselschiebers 4
bewegt werden können. Die Zahnstange 11d reicht bis in den
Raum zwischen der Schachtwand und dem Keil 7, so daß sie mit
dem Zahnrad 12 in Eingriff gelangen kann.

Die Führungsbahn 5 und die Stufen 13 sind hinter und vor
der Einführungsöffnung 6 nach oben hin offen, so daß beide
Magazintypen 3, 11 sowohl von hinten in den Schacht eingeführt und nach vorn aus dem Schacht herausgezogen als auch
von oben eingesetzt und entnommen werden können. Die Keile 10a,
10b liegen dabei so weit über der Stufe 13, daß unmittelbar
neben der Einführungsöffnung 6 zwischen der Stufe 13 und den
Keilen 10a, 10b eine kurze Führungsnut für das Magazin 11
gebildet wird. Auch bei Verwendung des Magazintyps 11
dienen diese Keile 10a, 10b zum Ausrichten der Dias 2 im
Magazin 11. Nachdem die Dias 2 im Magazintyp 11 enger beisamme
angeordnet sind oder auch dünner sein können, muß der Wechsel-

CW 2173.8 PP/MP

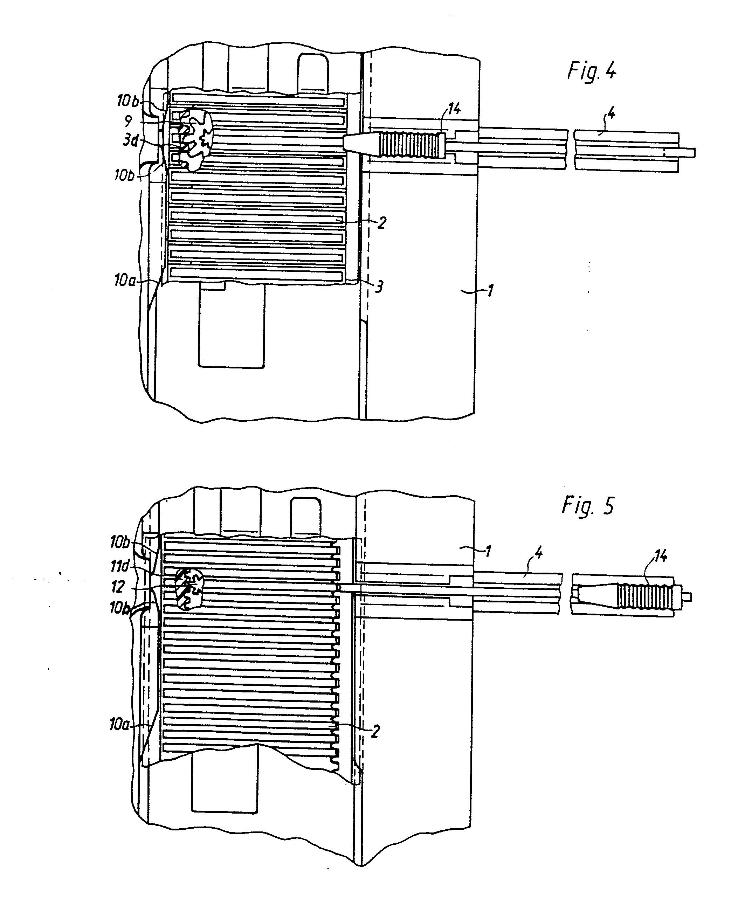

schieber 4 eine Breite haben, die so gering ist, daß er zwischen den eng beisammen liegenden Dias durchfahren und das jeweils zu projizierende, ggf. dünne Dia in das Projektionsfenster des Projektors 1 schieben kann. Ein derartig schmaler Schieber 4 ist aber u.U. nicht geeignet, dickere Dias im Magazin 3 ordnungsgemäß zu erfassen und zu transportieren. Aus diesem Grund ist auf den Wechselschieber 4 ein längs eines Schlitzes 4a verschiebbarer Reiter 14 aufgesetzt, der an seiner der Einführöffnung 6 zugewandten Seite 2 Rastnocken 14a aufweist. Dieser Reiter 14 ist so breit, daß er zwischen die Dias 2 im Magazin 3 einfahren und auch dickere Dias 2 erfassen kann. Bei Verwendung des Magazintyps 3 wird der Reiter 14 an das der Einführöffnung 6 zugewandte Ende des Wechselschiebers 4 in dem Schlitz 4a verschoben, so daß seine Rastnocken 14a an der Stirnseite des Schiebers 4 verrasten, vgl. Fig. 6. Sollen jedoch Magazine vom Magazintyp 11 verwendet werden, so wird der Reiter an das der Einführöffnung 6 abgewandte Ende des Wechselschiebers 4 verschoben, so daß er bei Betätigung des Wechselschiebers 4 nicht mehr auf ein Magazin 11 trifft, vgl. hierzu die Fig. 3 und 5.

# AGFA-GEVAERT AG 0011740

LEVERKUSEN

CAMERA-WERK MÜNCHEN
PATENTABTEILUNG

10-eh-ro CW 2173.8 PP/MP

13. Nov. 1978

_ 8 _

<u>Ansprüche</u>

1. Diaprojektor für gerahmte Diapositive, die in Magazinen
unterschiedlicher Typen angeordnet sind, wobei sich die
verschiedenen Magazintypen durch eine unterschiedliche
Diafachbreite unterscheiden, mit einem motorisch oder
von Hand betätigbaren Diawechselschieber und mit einer
Vorrichtung zum schrittweisen Weitertransport des jeweils
eingesetzten Magazins um jeweils eine Diafachbreite nach
der Zurückführung eines projizierten Dias in das Magazin,
<u>dadurch gekennzeichnet,</u> daß die Breite des Diawechselschiebers (4) in seinem Teilabschnitt, der beim Diatransport
zwischen die in einem Magazin (11) befindlichen Dias ein-
und ausfahren und dabei jeweils das mittlere von drei
Dias (2) mitnehmen muß, kleiner ist als der Abstand
zwischen einem Dia und dem übernächsten, in dem Magazin (11)
mit der geringsten Diafachbreite angeordneten Dia und daß
ein in Transportrichtung des Diawechselschiebers (4)

- 9 -

GW 2173.8 PP/MP

verschiebbarer Reiter (14) in diesen Teilabschnitt und
zwar an die Stirnkante (4b) des Diawechselschiebers (4)
bewegbar ist, dessen Breite größer als die des Wechselschiebers (4) bzw. von dessen Stirnkante (4b) und kleiner
als der Abstand zwischen einem Dia und dem übernächsten
Dia in dem Magazin (3) mit der größeren Diafachbreite ist.

2. Diaprojektor nach Anspruch 1, dadurch gekennzeichnet,
daß der Reiter (14) in einem in Transportrichtung verlaufenden
Schlitz (4a) des Diawechselschiebers (4) geführt ist.

3. Diaprojektor nach einem der vorhergehenden Ansprüche,
dadurch gekennzeichnet, daß der Reiter (14) gabelartig
den Diawechselschieber (4) übergreift und an seiner Stirnseite zwei einander zugewandte Nocken (14a) aufweist,
die je nach der Stellung des Reiters (14) entweder in den
Schlitz (4a) eingreifen oder mit dem Diawechselschieber (4)
in der Lage verrasten, in der seine Stirnkanten (14b)
mit der Stirnkante (4b) des Wechselschiebers (4) fluchten.

Hierzu 4 Blatt Zeichnungen

Fig. 1

3e
2
3
3d
3c
3b
3a
2
11
11b
11d
11c
11a
1
13
10a
6
10b
4
4b 7
14b
14
10b
10a
12
8 9
14
4a
13
4
13 5

0011740

1/4

Fig.2

Fig. 3

Fig. 4

Fig. 5

Fig.6

## EUROPÄISCHER RECHERCHENBERICHT

Nummer der Anmeldung

0011740

EP 79104360.7

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>DE - B2 - 2 147 173</u> (LEITZ) <br> ÷ Spalte 4, Zeilen 24-32; <br> Spalte 5, Zeilen 54-65; <br> Spalte 6, Zeilen 58-64; <br> Figuren 9,10,11 + <br><br> & FR-A-2 154 194 <br> -- | 1-3 |
| A | <u>CH - A5 - 576 154</u> (GAF) <br> ÷ Gesamt + <br> -- | 1-3 |
| A | <u>US - A - 3 953 119</u> (GAF) <br> + Gesamt + <br> ---- | 1-3 |

**KLASSIFIKATION DER ANMELDUNG (Int.Cl.)³**

G 03 B 23/02

**RECHERCHIERTE SACHGEBIETE (Int. Cl.)³**

G 03 B 23/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 15-01-1980 | GRONAU |

EPA form 1503.1  06.78